(19) Europäisches Patentamt
European Patent Office
Office européen des brevets

(11) Veröffentlichungsnummer: **0 121 230**
**B1**

(12) # EUROPÄISCHE PATENTSCHRIFT

(45) Veröffentlichungstag der Patentschrift: **07.01.87**

(21) Anmeldenummer: **84103406.9**

(22) Anmeldetag: **28.03.84**

(51) Int. Cl.⁴: **C 08 F 220/12,** C 09 D 7/00, C 11 D 3/37, D 06 P 1/52 // (C08F220/12, 220:28, 220:04, 222:00)

(54) **Crotonesterhaltige Copolymerisate, Verfahren zu ihrer Herstellung und ihre Verwendung als Verdicker in wässrigen Systemen sowie als Schlichtemittel.**

(30) Priorität: **31.03.83 DE 3311752**

(43) Veröffentlichungstag der Anmeldung: **10.10.84 Patentblatt 84/41**

(45) Bekanntmachung des Hinweises auf die Patenterteilung: **07.01.87 Patentblatt 87/2**

(84) Benannte Vertragsstaaten: **AT BE CH DE FR GB IT LI LU NL SE**

(56) Entgegenhaltungen:
**EP - A - 0 011 806**
**EP - A - 0 013 836**
**US - A - 4 075 411**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Engel, Dieter, Dr., Rüsselsheimer Strasse 33, D-6092 Kelsterbach (DE)**
Erfinder: **Rinno, Helmut, Dr., Goethestrasse 38, D-6238 Hofheim am Taunus (DE)**
Erfinder: **Zimmerschied, Klaus, Dr., Fasanenweg 19, D-6200 Wiesbaden (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft crotonesterhaltige Copolymerisate, Verfahren zu ihrer Herstellung sowie ihre Verwendung als viskositätserhöhende Substanzen in wässrigen Systemen, insbesondere wässrigen Dispersionen, mit überraschender verdickender und rheologiemodifizierender Wirkung, ferner ihre Verwendung als Schlichtemittel in der Textilindustrie.

Copolymerisate, die Salze der Methacrylsäure bzw. Acrylsäure sowie Alkylester dieser ungesättigten Carbonsäuren und zusätzlich ein oberflächenaktives Comonomeres enthalten, sind bereits bekannt.

So sind in der US-PS 36 52 497 Copolymere aus 5 - 30 Gew.-% einer ungesättigten $(C_2-C_6)$-Carbonsäure und 70 - 95 Gew.-% eines Alkylphenoxypoly-$(C_2-C_3)$-alkylenoxid-$(C_2-C_3)$-alkylesters einer ungesättigten $(C_2-C_6)$-Carbonsäure beschrieben. Der Anteil an grenzflächenaktivem, ungesättigtem Ester ist bei diesen Copolymeren ausserordentlich hoch. Als Folge daraus und der Tatsache, dass als Comonomeres ausschliesslich eine ungesättigte Carbonsäure eingesetzt wird, resultiert bei deren Verwendung als Verdicker in wässrigen Systemen z.B. eine erhöhte Wasserempfindlichkeit für Dispersionsglanzfarben, die damit verdickt worden sind. Der Anteil an wasserlöslichen Comonomeren in dem Verdicker-Copolymerisat beträgt hier 100%.

In der EP-PS 00 03 235 ist die Herstellung von wasserlöslichen Copolymerisaten aus 2 - 80 Gew.-% einer ungesättigten $(C_3-C_5)$-Carbonsäure, weniger als 50 Gew.-% eines weiteren äthylenisch ungesättigten Monomeren, sowie 20 - 98 Gew.-% eines Acryl- bzw. Methacrylsäureesters, dessen Alkoholkomponente aus einem äthoxylierten $(C_1-C_{20})$-Alkanol besteht, beschrieben. Auf Grund der ausgeprägten Wasserlöslichkeit dieser Copolymerisate tritt auch hier bei deren Einsatz als Verdicker in Dispersionsglanzfarben eine Verschlechterung der Wasserfestigkeit ein ($\geq$ 50 Gew.-% Anteil an wasserlöslichen Comonomeren in dem Verdicker-Copolymerisat).

In der EP-PS 00 11 806 und der EP-PS 00 13 836 sind Copolymere beschrieben, bestehend aus 15 - 60 Gew.-% einer ungesättigten Carbonsäure und 15 - 80 Gew.-% eines nichtionischen Monomeren sowie 1 - 30 Gew.-% eines Esters der Acryl- bzw. Methacrylsäure mit einem äthoxylierten $(C_8-C_{20})$-alkyl- oder $(C_8-C_{16})$-alkylphenyl-, (bzw. einem $(C_8-C_{30}$-alkyl-, -alkyl-aryl- oder -polycycl. alkylalkohol. In der EP-PS 00 13 836 ist zusätzlich die Verwendung eines Vernetzers in Mengen von 0 - 1 Gew.-% beschrieben. Die so hergestellten Copolymerisate besitzen im neutralisierten Zustand beachtenswerte Verdickerkapazitäten. Auch die Verwendung von Molekulargewichtsreglern ist in der EP-PS 00 13 836 erwähnt.

In der US-PS 42 30 844 sind Copolymere aus 30 - 65 Gew.-% ungesättigter Carbonsäure und 35 - 70 Gew.-% grenzflächenaktivem ungesättigtem Ester eines äthoxylierten $(C_8-C_{20})$-Alkylalkohols beschrieben. Auch diese Copolymeren bestehen somit vollständig aus wasserlöslichen Monomeren, so dass ihr Einsatz als Verdicker in Dispersionsglanzfarben zu einer Herabsetzung der Wasserfestigkeit führt.

In der EP-PS 00 13 836 und der US-PS 42 30 844 ist der spezielle Einfluss der oben beschriebenen Copolymeren auf die rheologischen Eigenschaften dispergierter Systeme (z.B. Latices, Copolymerisatdispersionen, Dispersionsglanzfarben) beschrieben. Ihre Wirkung besteht darin, dass eine Ausbalancierung anwendungstechnisch gewünschter Eigenschaften wässriger Systeme erzielt werden kann. Es können z.B. in einem Latex (einer Dispersionsglanzfarbe, usw.) sowohl die high-shear Viskosität, die den «Filmstand» und den Streichwiderstand beeinflusst, als auch die low-shear Viskosität, die den Filmverlauf bestimmt, beeinflusst werden.

Die Herstellung eines oberflächenaktiven Crotonsäureesters ist in der US-PS 40 75 411 beschrieben. Die hierbei eingesetzten Alkohole sind ausschliesslich ethoxylierte $(C_8-C_{20})$-Alkylphenole. Die Copolymerisation dieser Crotonester-Monomeren mit anderen Monomeren wird erwähnt. Die Produkte in den Beispielen weisen jedoch keine ungesättigten Carbonsäuren auf und besitzen weder verdickende noch rheologiemodifizierende Eigenschaften.

Die bisher beschriebenen Produkte werden allerdings hinsichtlich ihres gesamten Eigenschaftsbildes, wie Wasserfestigkeit, Glanz, Abbildungsschärfe, Verlauf, Streichwiderstand und Wirksamkeit bei niedrigen Konzentrationen in wässrigen Dispersionsfarben, den technischen Anforderungen der Praxis häufig nur unzureichend gerecht.

Der Erfindung lag daher die Aufgabe zu Grunde, ein rheologiemodifizierendes Copolymerisat herzustellen, das in möglichst niedriger Konzentration, d.h. bei hoher Verdickerkapazität, die Rheologie von wässrigen Systemen insbesondere dahingehend beeinflussen kann, dass bei hohem Schergefälle hohe Viskositäten in wässrigen Systemen erzielt werden können und dass im endgültigen Dispersionslack die Wasserfestigkeit des letzteren nicht durch lösliche Anteile beeinträchtigt wird.

Die Forderung nach hoher high-shear Viskosität (= REL-Viskosität) erklärt sich daraus, dass der Anwender z.B. beim Verstreichen von Farben mit relativ hoher high-shear Viskosität aufgrund des Streichwiderstandes eine deutlich stärkere Kraft aufwenden muss, um die Farbe zu verteilen, verglichen mit Farben, die keinen ausreichenden Streichwiderstand am Pinsel erkennen lassen. Die Kontrolle der verstrichenen Menge Farbe pro Flächeneinheit, d.h. die Schichtdicke der aufgebrachten Farbe, stellt sich dadurch bei der Anwendung der o.g. Verdicker nahezu von selbst ein, da bei zu weitgehendem Verstreichen der Streichwiderstand fühlbar ansteigt, weil der Schergradient mit sinkender Schichtstärke ansteigt. Die Forderung nach geringer low-shear Viskosität leitet sich davon ab, dass diese den Verlauf der Farbe nach der Applikation beeinflusst. Niedrige low-shear Viskosität ist somit ein Grundbedingung für einen guten Verlauf. Eine Steigerung der Wasserfestigkeit von wässrigen Dispersionslacken nach Applikation ist eine weitere Forderung.

Die so formulierte Aufgabe konnte nun überraschenderweise durch die nachfolgend charakterisierten Copolymerisate gelöst werden.

Gegenstand der Erfindung sind Copolymerisate, hergestellt durch radikalisch initiierte Emulsions-oder Lösungscoplymerisation ungesättigter, copolymerisationsfähiger Monomerer sowie gegebenenfalls nachfolgender teilweiser oder vollständiger Neutralisation der freien Säuregruppen der Copolymerisate durch Zusatz von Basen, dadurch gekennzeichnet, dass die Copolymerisate aus

a) 1-45 Gew.-% ethylenisch ungesättigten ($C_3$-$C_5$)-Monocarbonsäuren, ethylenisch ungesättigten ($C_4$-$C_6$)-Dicarbonsäuren oder deren Halbestern mit aliphatischen ($C_1$-$C_8$)-Alkoholen oder Gemischen dieser Monomeren, vorzugsweise Methacrylsäure, Acrylsäure, Crotonsäure, Maleinsäure, Maleinsäuremonoalkylester oder deren Gemischen, und

b) 0,5 bis 30 Gew.-% eines grenzflächenaktiven Crotonsäureesters der allgemeinen Formel I,

$$CH_3\text{-}CH=CH\text{-}\overset{\overset{\displaystyle O}{\|}}{C}\text{-}O\text{-}(CH_2\text{-}CH_2\text{-}O)_n\text{-}R \qquad (I)$$

worin

n eine Zahl von 2 bis 100 und

R einen aliphatischen ($C_2$-$C_{30}$)-Rest, der linear oder verzweigt sein kann, einen Mono-, Di- oder Trialkylphenylrest mit Alkylgruppen von jeweils 4 bis 12 C-Atomen, einen blockcopolymeren Rest der Formeln IIa oder IIb,

$$\text{-}(\underset{\displaystyle CH_3}{\underset{|}{CH}}\text{-}CH_2\text{-}O)_m\text{-}(CH_2\text{-}CH_2\text{-}O)_p\text{-}R^1 \qquad (IIa)$$

$$\text{-}(CH_2\text{-}\underset{\displaystyle CH_3}{\underset{|}{CH}}\text{-}O)_m\text{-}(CH_2\text{-}CH_2\text{-}O)_p\text{-}R^1 \qquad (IIb)$$

in denen m eine Zahl von 10 bis 100, p eine Zahl von 0 bis 100 und

$R^1$ = H, Crotyl, ($C_1$-$C_{20}$)-Alkyl, Phenyl, Alkylphenyl mit ($C_1$-$C_{20}$)-Alkylgruppen darstellen,

oder einen perfluorierten oder teilweise fluorierten ($C_1$-$C_{16}$)-Alkylrest bedeutet, und

c) 30-85 Gew.-% Methacrylsäureester oder Acrylsäureester von aliphatischen ($C_1$-$C_{18}$)-Alkoholen oder einer Mischung dieser Ester, und

d) 0-40 Gew.-% anderen ethylenisch ungesättigten Comonomeren, vorzugsweise Vinylester, Vinylaromaten, ethylenisch ungesättigte Nitrile, Ester von ethylenisch ungesättigten Mono- und Dicarbonsäuren, sofern sie nicht bereits oben unter c) aufgeführt sind, ethylenisch ungesättigte Sulfonsäuren bzw. ethylenisch ungesättigte Sulfonsäurederivate, und

e) 0-3 Gew.-% mehrfach ethylenisch ungesättigten Verbindungen, vorzugsweise Divinylbenzol, Diallylphthalat, Butandioldiacrylat bzw. -dimethacrylat, und

f) 0-5 Gew.-% Molekulargewichtsreglern, vorzugsweise Dodecylmercaptan, Tetrakismercaptoacetylpentaerythrit, Tetrachlorkohlenstoff oder Bromtrichlormethan,

aufgebaut sind.

Bei teilweiser oder vollständiger Neutralisation werden die Copolymerisate zunehmend bis vollständig wasserlöslich oder in Wasser kolloidal dispergierbar. In teilweise bzw. vollständig neutralisierter Form können sie als Verdicker wässriger Systeme mit rheologiemodifizierenden Eigenschaften im oben angegebenen Sinne wirken bzw. verwendet werden.

Weiterer Gegenstand der Erfindung sind daher die vorstehend beschriebenen erfindungsgemässen Copolymerisate in teilweise oder vollständig mit Basen neutralisierter wasserlöslicher oder in Wasser kolloidal dispergierbarer Form.

Eine bevorzugte Anwendungsmethode für die erfindungsgemässen Copolymerisate besteht z.B. darin, dass man sie in ihrer nichtneutralisierten und im allgemeinen wasserunlöslichen Säureform als Lösungen in geeigneten Lösungsmitteln oder insbesondere als niedrigviskose wässrige Dispersionen dem zu verdickenden wässrigen bzw. wasserhaltigen System zumischt und das resultierende Gemisch anschliessend mit Basen teilweise oder vollständig neutralisiert, so dass die Copolymerisate unter Entfaltung ihrer Verdickungs- und rheologiemodifizierenden Wirkung in eine wasserlösliche Salzform umgewandelt werden.

Unter den Verbindungen der Komponente (a) der erfindungsgemässen Copolymerisate sind z.B. Crotonsäure, Maleinsäure, Itaconsäure sowie Maleinsäurehalbester und Itaconsäurehalbester von geradkettigen oder verzweigten ($C_1$-$C_8$)-Alkoholen bevorzugt. Besonders bevorzugt sind Acrylsäure und Methacrylsäure.

Bei den Monomeren der Komponente (b) sind unter den Verbindungen der Formel I,

$$CH_3\text{-}CH=CH\text{-}\overset{\overset{\displaystyle O}{\|}}{C}\text{-}O\text{-}(CH_2\text{-}CH_2\text{-}O)_n\text{-}R \qquad (I)$$

worin n und R die vorstehend aufgeführten Bedeutungen haben, diejenigen bevorzugt mit n = 10-80, insbesondere mit n = 20-50, ferner sind diejenigen bevorzugt mit R = n- oder iso-($C_2$-$C_{30}$)-Alkyl, vorzugsweise ($C_{12}$-$C_{20}$)-Alkyl, insbesondere ($C_{16}$-$C_{18}$)-Alkyl, wie z.B. n- oder iso-Octyl, n- oder iso-Decyl, n- oder iso-Dodecyl, n- oder iso-Hexadecyl, n- oder iso-Octadecyl oder Gemische dieser Reste, so dass sich beispielsweise Crotonsäureester mit 10 Ethylenoxideinheiten und einem $C_{12}$-Alkylrest, oder mit 20 Ethylenoxideinheiten und einem iso-Octyl-Rest, oder mit 50 Ethylenoxideinheiten und einem $C_{18}$-Alkylrest ergeben können, oder

Monoalkylphenyl mit ($C_4$-$C_{12}$) n- oder iso-Alkylgruppen, vorzugsweise $C_8$- oder $C_9$ n- oder iso-Alkylgruppen, wie z.B. iso-Octylphenyl oder iso-Nonylphenyl, mit denen sich beispielsweise Crotonsäureester mit 5 Ethylenoxideinheiten und einem iso-Octylphenylrest, oder mit 11 Ethylenoxideinheiten und einem iso-Nonylphenylrest ergeben können, oder

Dialkylphenyl mit ($C_4$-$C_{12}$) n- oder iso-Alkylgruppen, wie z.B. Diisobutylphenyl, Diisooctylphenyl, Diisononylphenyl, mit denen sich beispielsweise Crotonsäureester mit 20 Ethylenoxideinheiten und einem Diisobutylphenylrest, oder 50 Ethylenoxideinheiten und einem Diisooctylphenylrest, oder 80 Ethylenoxideinheiten und einem Diisononylphenylrest ergeben können, oder

Trialkylphenyl mit ($C_4$-$C_{12}$) n- oder iso-Alkylgrup-

pen, wie z.B. Triisobutylphenyl, Triisooctylphenyl oder Triisononylphenyl, mit denen sich beispielsweise Crotonsäureester aus 11 Ethylenoxideinheiten und einem Triisobutylphenylrest, oder 23 Ethylenoxideinheiten und einem Triisononylphenylrest, oder 50 Ethylenoxideinheiten und einem Triisooctylphenylrest ergeben können, oder einem Rest der Formeln IIa oder IIb,

$$-(CH-CH_2-O)_m-(CH_2-CH_2-O)_p-R^1 \quad \text{(IIa)}$$
|
$CH_3$

$$-(CH_2-CH-O)_m-(CH_2-CH_2-O)_p-R^1 \quad \text{(IIb)}$$
|
$CH_3$

vorzugsweise einem solchen mit $m = 20\text{-}80$ und $p = 0\text{-}80$, insbesondere 0-50, und vorzugsweise $R^1$ = H, ($C_1$-$C_{20}$) n- oder iso-Alkyl, n- oder iso-Alkylphenyl mit ($C_1$-$C_{20}$)-Alkylgruppen, Phenyl oder Crotyl, wobei sich Crotonsäureester von Ethylenoxid-Propylenoxid-Copolymeren mit beispielsweise $p = 20$, $m = 20$ und einem iso-Butylrest, oder $p = 30$, $m = 40$ und einem Crotylrest, oder $p = 50$ und $m = 80$, oder $m = 20$, $p = 0$ und einem Nonylphenylrest ergeben können, oder

($C_2$-$C_{16}$)-Perfluoralkyl bzw. teilweise fluoriertes Alkyl.

Es können auch Gemische der genannten Monomeren eingesetzt werden, wobei zu berücksichtigen ist, dass die einzusetzenden Verbindungen in der Regel aus technischen Vorprodukten hergestellt werden, die z.B. hinsichtlich ihrer Oxethylierungsgrade bzw. ihrer Molekulargewichtsverteilung eine gewisse Verteilungsbreite aufweisen können.

Unter den Verbindungen der Komponente (c) sind Acrylsäure- und Methacrylsäure-methyl, -äthyl-, -isopropyl-, -isobutyl-, -tert.butyl- und -n-butylester bevorzugt. Besonders bevorzugt sind die Methyl- und Äthylester der Acryl- bzw. Methacrylsäure.

Unter den Verbindungen der Komponente (d) sind besonders geeignet: Vinylester von ($C_1$-$C_{12}$)-Carbonsäuren wie Essigsäure, Propionsäure, 2-Ethylhexansäure, Versaticsäure 9, Versaticsäure 10, Laurinsäure, ferner

ungesättigte aromatische Verbindungen wie Styrol oder Vinyltoluol, ferner

Ester ungesättigter Mono- und Dicarbonsäuren mit $C_8$- oder höheren Alkoholen, wie Acryl- und Methacrylsäureester, beispielsweise Dodecylacrylat oder Octadecylmethacrylat, oder

Crotonsäureester von ($C_1$-$C_8$)-Alkoholen, wie z.B. Methylcrotonat oder 2-Ethylhexylcrotonat, oder

Malein- bzw. Itaconsäureester mit ($C_1$-$C_8$)-Alkoholen, wie z.B. Dimethylmaleinat, Dibutylmaleinat, Di-2-ethylhexylmaleinat, Dimethylitaconat, oder Monoacrylsäureester oder Monomethacrylsäureester von Diolen und Triolen, wie z.B. Ethylenglykol, Butendiol-1,4, Hexandiol-1,6, Glycerin und Trimethylolpropan, oder

ungesättigte Nitrile wie Acrylnitril oder Methacrylnitril, oder

ungesättigte Sulfonsäuren, vorzugsweise Äthylensulfonsäure oder Acrylamidopropansulfonsäure bzw. vorzugsweise deren Salze, insbesondere Alkali- oder Ammoniumsalze.

Unter den Verbindungen der Komponente (e) sind besonders geeignet: Diallylphthalat, Divinylbenzol, Butandiolmethacrylat, Äthandioldimethacrylat, Hexandioldimethacrylat, Äthandioldiacrylat, Butandioldiacrylat, Hexandioldiacrylat, Pentaerythritoltriacrylat, Trimethylolpropantriacrylat, Tetraethylenglykoldiacrylat, Tripropylenglykoldiacrylat, Trimethylolpropantrimethacrylat.

Ein aus erfindungsgemässen Komponenten gemäss (a) bis (f) aufgebautes Copolymerisat kann zum Beispiel durch übliche, radikalisch initiierte Lösungscopolymerisation in üblichen Lösungsmitteln, oder auch in Form einer Dispersion durch übliche Emulsionscopolymerisation hergestellt werden. Bei einer Herstellung über Emulsionscopolymerisation liegt der Feststoffgehalt der resultierenden Dispersion vorzugsweise zwischen 10 und 55 Gew.-%. Bevorzugtes Herstellungsverfahren ist die Emulsionscopolymerisation, wobei bevorzugt das grenzflächenaktive Comonomere (b) in der Wasserphase vorgelegt wird.

Bei der Herstellung durch Lösungscopolymerisation können die üblichen Verfahren zur Copolymerisation in organischen Medien mit radikalischen Initiatoren angewendet werden. Im Fall der Emulsionscopolymerisation kann ebenfalls nach üblichen Methoden verfahren werden, d.h. es können die üblichen ionogenen und nichtionogenen Emulagtoren zur Emulgierung der Monomeren und zur Stabilisierung des Latex eingesetzt werden. Als anionische Emulgatoren kommen z.B. infrage: Alkylsulfate, Alkylarylsulfate, Alkylarylsulfonate, Alkali- und/oder Ammoniumsalze von Alkyl- bzw. Alkylarylpolyglykolethersulfaten, als nichtionogene Emulgatoren kommen z.B. infrage: oxethylierte Fettalkohole oder oxethylierte Alkylphenole. Die eingesetzte Emulgatormenge beträgt im allgemeinen 0,3-5 Gew.-%, bezogen auf das Gesamtmonomerengewicht.

Weiterer Gegenstand der Erfindung ist somit ein Verfahren zur Herstellung von Copolymerisaten durch radikalisch initiierte Emulsions- oder Lösungscopolymerisation ungesättigter, copolymerisationsfähiger Monomerer sowie gegebenanfalls nachfolgender teilweiser oder vollständiger Neutralisation der freien Säuregruppen der Copolymerisate durch Zusatz von Basen, dadurch gekennzeichnet, dass man als Monomere

a) 1-45 Gew.-% ethylenisch ungesättigte ($C_3$-$C_5$)-Monocarbonsäuren, ethylenisch ungesättigte ($C_4$-$C_6$)-Dicarbonsäuren oder deren Halbester mit aliphatischen ($C_1$-$C_8$)-Alkoholen oder Gemische dieser Monomeren, vorzugsweise Methacrylsäure, Acrylsäure, Crotonsäure, Maleinsäure, Maleinsäuremonoalkylester oder deren Gemische, und

b) 0,5-30 Gew.-% eines grenzflächenaktiven Crotonsäureesters der allgemeinen Formel I,

$$CH_3-CH=CH-\overset{\overset{\large O}{\|}}{C}-O-(CH_2-CH_2-O)_n-R \quad \text{(I)}$$

worin n eine Zahl von 2 bis 100 und

R einen aliphatischen ($C_2$-$C_{30}$)-Rest, der linear oder verzweigt sein kann, einen Mono-, Di- oder Trialkylphenylrest mit Alkylgruppen von jeweils 4 bis

12 C-Atomen, einen blockcopolymeren Rest der Formeln IIa oder IIb,

$$-(CH-CH_2-O)_m-(CH_2-CH_2-O)_p-R^1 \quad \text{(IIa)}$$
|
$CH_3$

$$-(CH_2-CH-O)_m-(CH_2-CH_2-O)_p-R^1 \quad \text{(IIb)}$$
|
$CH_3$

in denen m eine Zahl von 10 bis 100, p eine Zahl von 0 bis 100 und

$R^1$ = H, Crotyl, ($C_1$-$C_{20}$)-Alkyl, Phenyl, Alkylphenyl mit ($C_1$-$C_{20}$)-Alkylgruppen darstellen,

oder einen perfluorierten oder teilweise fluorierten ($C_1$-$C_{16}$)-Alkylrest bedeutet, und

c) 30-85 Gew.-% Methacrylsäureester oder Acrylsäureester von aliphatischen ($C_1$-$C_{18}$)-Alkoholen oder eine Mischung dieser Ester, und

d) 0-40 Gew.-% andere ethylenisch ungesättigte Comonomere, vorzugsweise Vinylester, Vinylaromaten, ethylenisch ungesättigte Nitrile, Ester von ethylenisch ungesättigten Mono- und Dicarbonsäuren, sofern sie nicht bereits oben unter c) aufgeführt sind, ethylenisch ungesättigte Sulfonsäuren bzw. ethylenisch ungesättigte Sulfonsäurederivate, und

e) 0-3 Gew.-% mehrfach ethylenisch ungesättigte Verbindungen, vorzugsweise Divinylbenzol, Diallylphthalat, Butandioldiacrylat bzw. -dimethacrylat, und

f) 0-5 Gew.-% Molekulargewichtsregler, vorzugsweise Dodecylmercaptan, Tetrakismercaptoacetylpentaerythrit, Tetrachlorkohlenstoff oder Bromtrichlormethan copolymerisiert und das resultierende Copolymerisat gegebenenfalls durch Neutralisation mit Basen, vorzugsweise mit Alkali-, Ammonium- oder Amin-Basen, in ein wasserlösliches oder in Wasser kolloidal dispergierbares Copolymerisatsalz überführt.

Bevorzugte Verfahrensweise ist die Emulsionscopolymerisation, bei der wiederum bevorzugt das grenzflächenaktive Comonomere (b) in der Wasserphase vorgelegt wird. Der Copolymerisatanteil in den erfindungsgemäss hergestellten wässrigen Dispersionen beträgt vorzugsweise 10 bis 55 Gew.-%, insbesondere 25 bis 50 Gew.-%.

Bei der Auswahl von Art und Mengenverhältnissen der Comonomeren (a) bis (e) sind u.a. folgende Gesichtspunkte zu beachten. Die Verwendung der als Komponente (a) aufgeführten ungesättigten Carbonsäuren trägt dazu bei, die leichte Dispergierbarkeit der erfindungsgemässen Copolymerisate in wässriger Dispersion zu gewährleisten. In teilweise oder vollständig neutralisierter Form trägt die Komponente (a) ausserdem u.a. entscheidend zur Erzielung der Wasserlöslichkeit bzw. der wässrigkolloidalen Dispergierbarkeit der erfindungsgemässen Copolymerisatsalze bei.

Zu berücksichtigen ist ferner, dass bei den jeweils verwendeten Comonomeren eine Copolymerisation untereinander prinzipiell möglich sein muss und dass sie auch tatsächlich erfolgt. Im einfachsten Fall lässt sich dies unter Zuhilfenahme der Copolymerisationsparameter bzw. der Q- und e-Werte abschätzen (vgl. z.B. Brandrup, Immergut, Polymer Handbook, 2nd ed. (1975), John Wiley & Sons, New. York). Unter Umständen muss bei der Wahl bestimmter Comonomerer (a) - (e) das Monomerenmischungsverhältnis danach ausgewählt werden, wie eine Copolymerisation durch Variation des Syntheseverfahrens und u.a. speziell der Art und Weise der Monomerdosierung möglich ist. So können sich gegebenenfalls Copolymerisationen u. U. dadurch erzwingen lassen, dass man eine oder mehrere Monomerkomponenten vorlegt und das übrige Monomere bzw. die übrige Monomermischung erst im Verlauf der Polymerisation zudosiert. Im Falle der Emulsionscopolymerisation kann es in diesem Zusammenhang von entscheidender Bedeutung sein, ob das Monomere für sich allein oder als wässrige Emulsion zudosiert wird. Das gleiche gilt hier auch für die Art der Emulgatorzugabe. Es können dabei Unterschiede hinsichtlich Teilchengrösse, Teilchengrössenverteilung und Stabilität der Copolymerisatdispersion beobachtet werden in Abhängigkeit davon, ob der Emulgator vorgelegt wird oder ob er während der Copolymerisation zudosiert wird.

Die Komponente (b) ist bei den erfindungsgemässen Copolymerisaten derjenige Bestandteil, der vermutlich am meisten zur Ausbildung der gewünschten Gesamteigenschaften bei der Anwendung in wässrigen Dispersionslackfarben beiträgt. Da Crotonsäureester nicht oder nur schlecht mit sich selbst polymerisieren, kann deren Einsatz bei Copolymerisationen nicht zu Segmenten von oberflächenaktiven Crotonsäureestern im Copolymerisat führen. Durch Variation der Länge der Ethylenoxidkette in dem Crotonsäureester kann die Wirkung des entstehenden Copolymerisats als Verdicker und Rheologiemodifizierer beeinflusst werden. So nimmt z.B. die viskositätssteigernde Wirkung des Copolymerisats im high-shear und im low-shear Bereich in dispersen wässrigen Systemen mit steigender Ethylenoxidkettenlänge zu.

Die relativen Mengen der Komponenten (a) bis (d) können innerhalb eines relativ weiten Rahmens variiert werden. Sie können vorzugsweise bei (a) 1-45 Gew.-%, (b) 0,5-30 Gew.-%, (c) 30-85 Gew.-% und (d) 0-40 Gew.-% betragen; besonders bevorzugt sind (a) 5-40 Gew.-%, (b) 1-25 Gew.-%, (c) 40-80 Gew.-% und (d) 0-35 Gew.-%; ganz besonders bevorzugt sind (a) 8-40 Gew.-%, (b) 3-20 Gew.-%, (c) 50-75 Gew.-% und (d) 30 Gew.-%.

Zur Initiierung der Emulsionscopolymerisation werden vorzugsweise übliche, Radikalketten startende wasserlösliche Initiatoren in Mengen von 0,01-2 Gew.-%, bezogen auf die Gesamtmonomermenge, eingesetzt. Beispiele dazu sind u.a. Alkali- oder Ammoniumpersulfat. Die Polymerisationstemperatur wird entsprechend den Halbwertszeiten der Initiatoren in üblichee Weise eingestellt.

Zur Steigerung der Verdickerkapazität bzw. zur weiteren Beeinflussung der rheologischen Eigenschaften der gelösten Copolymerisate in wässrigen Systemen kann es in manchen Fällen vorteilhaft sein, wenn eine mehrfach ethylenisch ungesättigte Verbindung als Comonomeres mitverwendet wird. Als solche können vernetzende Comonomere, wie z.B. Diallylphthalat, Divinylbenzol, Allylmethacrylat oder

Ethylenglykoldimethacrylat verwendet werden. Die eingesetzten Mengen können innerhalb eines Bereiches von 0-3 Gew.-%, vorzugsweise 0-1 Gew.-%, bezogen auf die Gesamtmonomerenmenge, variiert werden. Während der Polymerisation bilden sich Verzweigungen oder Netzwerke aus, die nach dem mehr oder weniger vollständigen Neutralisieren des Copolymerisats zur Bildung von Gelstrukturen und damit zu Ausbildung spezifischer rheologischer Eigenschaftsprofile führen können.

Die Verwendung von Molekulargewichtsreglern während der Copolymerisation führt schliesslich zu niedrigeren Molekulargewichten der Copolymerisate. Damit sinkt die Viskosität der wässrigen Lösungen derartiger Copolymerisate, verglichen mit den ungeregelten Produkten. Man kann auf diese Weise die Möglichkeit verbessern, die erforderliche Balance zwischen hoher high-shear Viskosität und niedriger low-shear Viskosität für spezielle Anwendungssysteme gezielt einzustellen. Als Regler können alle Verbindungen eingesetzt werden, die radikalübertragende Eigenschaften besitzen. Beispiele dazu sind vorzugsweise Mercaptane (ein- und mehrfunktionelle) wie z.B. n- bzw. t-Dodecylmercaptan, Tetrakismercaptoacetylpentaerythrit, Thioglykolsäure. Es können aber auch andere Verbindungen als Regler eingesetzt werden, wie z.B. α-Methylstyrol, Toluol, Trichlorbrommethan, Tetrachlorkohlenstoff. Die Menge des eingesetzten Reglers kann dabei innerhalb eines Bereiches von 0-5 Gew.-%, bezogen auf die Gesamtmonomerenmenge, variiert werden.

Eine zusätzliche Beeinflussung der Verdickerkapazität erfindungsgemässer Copolymerisate kann durch (weiteren) Zusatz von ionischen oder nichtionischen Emulgatoren zum wässrigen System, insbesondere vor, aber auch nach erfolgter Neutralisation der freien Säuregruppen des Copolymerisats, erzielt werden. Werden zum Verdicken eines wässrigen, disperse Feststoffe enthaltenden Systems z.B. 0,01-5 Gew.-% des erfindungsgemässen Copolymerisats als Verdicker eingesetzt (bezogen auf Feststoff), so liegt der günstige Bereich für ggf. noch zuzusetzende Emulgatormengen zwischen 0,01 und 10 Gew.-% (bezogen auf Feststoff).

Es zeigte sich nun überraschenderweise, dass die mit einem grenzflächenaktiven Ester der Crotonsäure erfindungsgemäss hergestellten Copolymerisate bzw. Copolymerisatsalze oder -partialsalze in wässriger Lösung deutlich höhere Verdickerkapazitäten besitzen als vergleichbare Copolymerisate bzw. deren Salze, die unter identischen Bedingungen mit entsprechenden grenzflächenaktiven Estern der Methacrylsäure oder der Acrylsäure, anstelle der grenzflächenaktiven Crotonsäureester, hergestellt worden sind. Dabei konnte die bessere Verdickerkapazität der erfindungsgemässen Copolymerisate sowohl im high-shear Bereich (Schergradient $D = 10000\ s^{-1}$) als auch im low-shear Bereich ($D = 0,1\ s^{-1}$) beobachtet werden. Dies hat u.a. den Vorteil, dass der erfindungsgemässe Verdicker in geringeren Aufwandmengen benötigt wird, um wässrigen Systemen bestimmte rheologische Eigenschaften zu vermitteln, vergleichsweise zum Einsatz entsprechender Copolymerisate, die Acryl- bzw. Methacrylesterkomponenten anstelle der Crotonesterkomponente enthalten.

Die Anwendung der erfindungsgemässen Copolymerisate als Verdicker erfolgt vorzugsweise in deren teilweise oder vollständig mit Basen neutralisierten wasserlöslichen oder in Wasser kolloidal dispergierbaren Form, um wässrige Systeme zu verdicken und ihnen spezielle rheologische Eigenschaften zu verleihen. Während die erfindungsgemässen Copolymerisate in ihrer freien Säureform vorzugsweise wasserunlösliche Produkte darstellen, sind ihre Salze mit Basen, insbesondere die Alkali-, Ammonium- oder Aminsalze, klar wasserlöslich oder in kolloidaler Form in Wasser dispergierbar. Der Einsatz der Copolymerisate als Verdicker erfolgt bevorzugt und vorteilhaft in der Weise, dass man sie dem zu verdickenden wässrigen System zunächst als niedrigviskose Lösung in einem geeigneten Lösungsmittel oder als wenig viskose wässrige Copolymerisat-Dispersion beimischt und anschliessend das resultierende Gemisch, einschliesslich z.B. aller gegebenenfalls darin enthaltenen Pigmente und Lackbestandteile, durch Basenzusatz teilweise oder vollständig neutralisiert oder leicht alkalisch einstellt, beispielsweise auf pH-Werte von 5-10,5, insbesondere 8-9,5. Bevorzugt werden die Copolymerisate als wässrige Dispersionen den zu verdickenden wässrigen Systemen zugemischt.

Bevorzugte Einsatzgebiete für die erfindungsgemässen Copolymerisate sind das Verdicken und die Viskositätseinstellung disperser wässriger Systeme, wie z.B. vorzugsweise von Dispersionsfarben, Dispersionsglanzlacken, Textildruckpasten, Papierdruckpasten, ferner von bioziden Wirkstoffdispersionen für den Pflanzenschutz und die Schädlingsbekämpfung, Flüssigdüngemitteln, Emulsionsreinigern, Abbeizpasten, Enteisungsmitteln oder kosmetischen Zubereitungen. Eine weitere interessante Verwendung der erfindungsgemässen Copolymerisate ist deren Einsatz als durch alkalische Flotten leicht auswaschbare Schlichtemittel in der Textilindustrie bzw. als Schlichtemittelkomponenten.

In wässrigen Dispersionsglanzlacken z.B. führt der Einsatz der erfindungsgemässen Copolymerisate besonders vorteilhaft zur Ausbildung der vom Anwender gewünschten rheologischen Eigenschaften, wie «hoher» high-shear Viskosität und «niedriger» low-shear Viskosität. Unter hoher high-shear Viskosität werden dabei Werte zwischen 0,2 und 0,35 Pa.s (2-3,5 Poise) bei $D = 10000\ s^{-1}$, und unter niedriger low-shear Viskosität Werte um etwa 5-10 Pa.s (50-100 Poise) bei $D = 0,1\ s^{-1}$ und darunter verstanden.

Die Einsatzmengen an den erfindungsgemässen Copolymerisaten sind nicht kritisch. Sie liegen jedoch beim Einsatz als Verdicker bevorzugt im Bereich von 0,01 bis 5 Gew.-% Copolymerisat, bezogen auf das zu verdickende wässrige System.

Die Erfindung wird durch die nachfolgenden Beispiele näher erläutert.

*Beispiel 1*

Synthese des grenzflächenaktiven Crotonsäureesters (b): 828 g oxethylierter ($C_{16}$-$C_{18}$)-Fettalkohol (n = 50) wurden in 828 g Toluol azeotrop getrocknet. Nach ca. 1,5 h wurden 55,8 g Crotonsäureanhydrid zugesetzt. Die Lösung wurde weitere 2,5 h am Rückfluss gekocht. Nach dem Abkühlen wurde das Toluol unter Vakuum abgezogen. Ausbeute: 883 g bräunlichgelbes, wasserlöslichen Produkt von wachsartiger Konsistenz. Die Umsatzkontrolle erfolgte durch Dünnschichtchromatographie.

Analog der obigen Vorschrift für den grenzflächenaktiven Crotonsäureester (b) wurden aus den nachstehend unter (a) und (c) bis (o) aufgeführten oxethylierten Alkoholkomponenten die entsprechenden und gleichfalls grenzflächenaktiven Crotonsäureester (a) bzw. (c) bis (o) hergestellt.

| Alkoholkomponente | Oxethylierungsgrad (mole EO) |
|---|---|
| a) oxethylierter ($C_{16}$-$C_{18}$)-Fettalkohol | 80 |
| b) » | 50 |
| c) » | 25 |
| d) » | 15 |
| e) » | 11 |
| f) oxethyliertes Tributylphenol | 50 |
| g) » | 30 |
| h) » | 18 |
| i) oxethylierter ($C_{12}$-$C_{16}$)-Perfluoralkohol | 8 |
| j) » | 13 |
| k) oxethyliertes Nonylphenol | 30 |
| l) » | 23 |
| m) » | 14 |
| n) » | 8 |
| o) Crotonester eines Propylenoxid-Ethylenoxid-Blockcopolymeren. | |

*Beispiel 2*

Synthese erfindungsgemässer Copolymerisate durch Emulsionspolymerisation.

Herstellung der Probe 1:

In einem (2 l) 3-Halskolben mit Rührer, Rückflusskühler und Innenthermometer wurden 28 g des Na-Salzes eines Alkylarylpolyglykolethersulfats (50 gew.-%ig) in 738 g entsalztem Wasser (= E-Wasser) gelöst und unter Rühren auf 80°C erwärmt. Von einer Initiatorlösung, bestehend aus 0,25 g Ammoniumpersulfat in 50 g E-Wasser, wurden 10 ml zugesetzt sowie 50 g einer Monomermischung, bestehend aus 252 g Ethylacrylat, 63 g Acrylsäure und 35 g grenzflächenaktivem Crotonsäureester (b) aus Beispiel 1. Anschliessend wurde der Rest der Monomerenmischung, nach einer halben Stunde beginnend, während zwei Stunden zusammen mit dem Rest der Initiatorlösung zudosiert. Nach Ende der Zudosierung wurde unter Fortsetzung des Rührens noch eine weitere Stunde nachgeheizt und der Ansatz anschliessend auf Raumtemperatur gebracht. Feststoffgehalt der Dispersion: 30,1 Gew.-%. Die prozentuale Zusammensetzung des Copolymerisatanteils der Probe 1 ist in Tabelle 1 aufgeführt.

In gleicher Weise wie bei der Probe 1 wurden durch analoge Emulsionspolymerisationen aus den in der Tabelle 1 jeweils aufgeführten Monomerbestandteilen und Mengen die Proben 2 bis 12 gleichfalls in Dispersionsform hergestellt. Die teilweise mitverwendeten Regler und Vernetzer wurden dabei in den angegebenen Mengen, bezogen auf die Gesamtmonomerenmenge, jeweils der Monomerenmischung beigemischt.

Durch Neutralisation der Dispersionen mit wässriger Natronlauge oder mit wässrigem Ammoniak konnten die Copolymerisatbestandteile der Proben 1 bis 12 in wasserlösliche Produkte mit den gewünschten verdickenden und rheologiemodifizierenden Eigenschaften übergeführt werden.

TABELLE 1

Zusammensetzung der Copolymerisatbestandteile der Dispersionen 1 bis 12 in Gew.-% Monomereinheiten, jeweils bezogen auf das Copolymerisat ohne Regler- und Vernetzeranteile.

| Probe Nr. | Ethylacrylat (Gew.-%) | Acrylsäure (Gew.-%) | Methacrylsäure (Gew.-%) | oberfl. akt. Crotonester aus Bsp. 1 (b) (Gew.-%) | Regler: n-Dodecylmercaptan (Gew.-%) | Vernetzer: Divinylbenzol (Gew.-%) |
|---|---|---|---|---|---|---|
| 1 | 72 | 18 | — | 10 | — | — |
| 2 | 72 | 18 | — | 10 | 0,2 | — |
| 3 | 72 | 18 | — | 10 | 0,5 | — |
| 4 | 72 | 18 | — | 10 | 1,0 | — |
| 5 | 80 | 20 | — | — | — | — |
| 6 | 80 | 20 | — | — | 0,2 | — |
| 7 | 55 | 20 | 5 | 20 | 0,2 | — |
| 8 | 50 | 20 | 10 | 20 | 0,2 | — |
| 9 | 40 | 20 | 20 | 20 | 0,2 | — |
| 10 | 72 | 18 | — | 10 | 0,2 | 0,25 |
| 11 | 72 | 18 | — | 10 | 0,2 | 0,5 |
| 12 | 72 | 18 | — | 10 | 0,2 | 1,0 |

*Beispiel 3*

In gleicher Weise wie in Beispiel 2 bschrieben, wurden durch analoge Emulsionspolymerisationen die Proben 13 bis 26 aus den in der nachstehenden Tabelle 2 jeweils aufgeführten Monomerbestandteilen und Mengen in Dispersionsform hergestellt. Der teilweise mitverwendete Regler wurde dabei in den angegebenen Mengen, bezogen auf die Gesamtmonomerenmenge, jeweils der Monomerenmischung beigemischt. Die Bezeichnung der grenzflächenaktiven Crotonsäureester in Spalte 6 der Tabelle 2 bezieht sich auf die Angaben in Beispiel 1.

Durch Neutralisation der Dispersionen mit wässriger Natronlauge oder mit wässrigem Ammoniak konnten die Copolymerisatbestandteile der Proben 13 bis 26 in wasserlösliche Produkte mit den gewünschten verdickenden und rheologiemodifizierenden Eigenschaften übergeführt werden.

TABELLE 2

Zusammensetzung der Cpolymerisatbestandteile der Dispersionen 13 bis 26 in Gew.-% Monomereinheiten, jeweils bezogen auf das Copolymerisat ohne Regleranteil.

| Probe Nr. | Ethylacrylat (Gew.-%) | Methacrylsäure (Gew.-%) | Acrylsäure (Gew.-%) | Styrol (Gew.-%) | oberfl. akt. Crotonester Bsp. 1 aus Nr. | oberfl. akt. Crotonester (Gew.-%) | Regler: n-Dodecylmercaptan (Gew.-%) |
|---|---|---|---|---|---|---|---|
| 13 | 40 | 45 | — | — | 1g | 15 | — |
| 14 | 40 | 40 | — | — | 1i | 20 | 0,1 |
| 15 | 30 | 40 | — | — | 1c | 30 | 0,5 |
| 16 | 45 | 35 | — | — | 1h | 15 | 0,3 |
| 17 | 50 | 45 | — | — | 1f | 5 | 0,2 |
| 18 | 60 | 30 | — | — | 1l | 20 | — |
| 19 | 45 | 25 | — | — | 1j | 30 | 0,2 |
| 20 | — | — | 10 | 80 | 1f | 10 | 0,2 |
| 21 | — | — | 20 | 70 | 1f | 10 | 0,2 |
| 22 | — | 20 | 10 | 60 | 1f | 10 | 0,2 |
| 23 | — | 40 | — | 55 | 1h | 5 | 0,1 |
| 24 | — | 30 | — | 65 | 1h | 5 | 0,3 |
| 25 | — | 40 | — | 40 | 1m | 20 | 0,2 |
| 26 | — | 45 | — | 45 | 1g | 10 | — |

**Patentansprüche für die Vertragsstaaten:**
BE CH DE FR GB IT LI LU NL SE

1. Copolymerisate, hergestellt durch radikalisch initiierte Emulsions- oder Lösungscopolymerisation ungesättigter copolymerisationsfähiger Monomerer sowie gegebenenfalls nachfolgender teilweiser oder vollständiger Neutralisation der freien Säuregruppen der Copolymerisate durch Zusatz von Basen, dadurch gekennzeichnet, dass die Copolymerisate aus

a) 1-45 Gew.-% ethylenisch ungesättigten ($C_3$-$C_5$)-Monocarbonsäuren, ethylenisch ungesättigten ($C_4$-$C_6$)-Dicarbonsäuren oder deren Halbestern mit aliphatischen ($C_1$-$C_8$)-Alkoholen oder Gemischen dieser Monomeren, vorzugsweise Methacrylsäure, Acrylsäure, Crotonsäure, Maleinsäure, Maleinsäuremonoalkylester oder deren Gemischen, und

b) 0,5-30 Gew.-% eines grenzflächenaktiven Crotonsäureesters der allgemeinen Formel I,

$$CH_3\text{-}CH=CH\text{-}\overset{\overset{\displaystyle O}{\|}}{C}\text{-}O\text{-}(CH_2\text{-}CH_2\text{-}O)_n\text{-}R \qquad (I)$$

worin n eine Zahl von 2 bis 100 und

R einen aliphatischen ($C_2$-$C_{30}$)-Rest, der linear oder verzweigt sein kann, einen Mono-, Di- oder Trialkylphenylrest mit Alkylgruppen von jeweils 4 bis 12 C-Atomen, einen blockcopolymeren Rest der Formeln IIa oder IIb,

$$\text{-}(\underset{\underset{\displaystyle CH_3}{|}}{CH}=CH_2\text{-}O)_m\text{-}(CH_2\text{-}CH_2\text{-}O)_p\text{-}R^1 \qquad (IIa)$$

$$\text{-}(CH_2\text{-}\underset{\underset{\displaystyle CH_3}{|}}{CH}\text{-}O)_m\text{-}(CH_2\text{-}CH_2\text{-}O)_p\text{-}R^1 \qquad (IIb)$$

in denen m eine Zahl von 10 bis 100, p eine Zahl von 0 bis 100 und

$R^1$ = H, Crotyl, ($C_1$-$C_{20}$)-Alkyl, Phenyl, Alkylphenyl mit ($C_1$-$C_{20}$)-Alkylgruppen darstellen,

oder einen perfluorierten oder teilweise fluorierten ($C_1$-$C_{16}$)-Alkylrest bedeutet, und

c) 30-85 Gew.-% Methacrylsäureester oder Acrylsäureester von aliphatischen ($C_1$-$C_{18}$)-Alkoholen oder einer Mischung dieser Ester, und

d) 0-40 Gew.-% anderen ethylenisch ungesättigten Comonomeren, vorzugsweise Vinylester, Vinylaromaten, ethylenisch ungesättigte Nitrile, Ester von ethylenisch ungesättigten Mono- und Dicarbonsäuren, sofern sie nicht bereits oben unter c) aufgeführt sind, ethylenisch ungesättigte Sulfonsäuren bzw. ethylenisch ungesättigte Sulfonsäurederivate, und

e) 0-3 Gew.-% mehrfach ethylenisch ungesättigten Verbindungen, vorzugsweise Divinylbenzol, Diallylphthalat, Butandioldiacrylat bzw. -dimethacrylat, und

f) 0-5 Gew.-% Molekulargewichtsreglern, vorzugsweise Dodecylmercaptan, Tetrakismercaptoacetylpentaerythrit, Tetrachlorkohlenstoff oder Bromtrichlormethan,

aufgebaut sind.

2. Cololymerisate nach Anspruch 1, dadurch gekennzeichnet, dass sie in teilweise oder vollständig mit Basen neutralisierter wasserlöslicher oder in Wasser kolloidal dispergierbarer Form vorliegen.

3. Verwendung der Copolymerisate nach Ansprüchen 1 oder 2, zum Verdicken von wässrigen Systemen, insbesondere wässrigen Dispersionen.

4. Verwendung der Copolymerisate in teilweise oder vollständig mit Basen neutralisierter, wasserlöslicher oder in Wasser kolloidal dispergierbarer Form nach Ansprüchen 1 oder 2 zum Verdicken von wässrigen Systemen, insbesondere wässrigen Dispersionen.

5. Verwendung der Copolymerisate nach Ansprüchen 1 oder 2, zum Verdicken von Dispersionsfarben, Dispersionsglanzlacken, Textildruckpasten oder Papierdruckpasten.

6. Verwendung der Copolymerisate in teilweise oder vollständig mit Basen neutralisierter, wasserlöslicher oder in Wasser kolloidal dispergierbarer Form nach Ansprüchen 1 oder 2 zum Verdicken von Dispersionsfarben, Dispersionsglanzlacken, Textildruckpasten oder Papierdruckpasten.

7. Verwendung der Copolymerisate nach Ansprüchen 1 oder 2, zum Verdicken von wässrigen Systemen, insbesondere wässrigen Dispersionen, indem man die Copolymerisate in ihrer Säureform als Lösungen oder Dispersionen in der erforderlichen Menge mit dem zu verdickenden wässrigen System, insbesondere der zu verdickenden Dispersion, vermischt und das resultierende Gemisch anschliessend durch Zusatz von Basen teilweise oder vollständig neutralisiert oder schwach alkalisch einstellt, so dass die Copolymerisate als in Wasser lösliche oder kolloidal dispergierbare Copolymerisatsalze vorliegen.

8. Verwendung der Copolymerisate nach Anspruch 1 oder 2 als Schlichtemittel in der Textilindustrie.

9. Verfahren zur Herstellung von Copolymerisaten durch radikalisch initiierte Emulsions- oder Lösungscopolymerisation ungesättigter, copolymerisationsfähiger Monomerer sowie gegebenenfalls nachfolgender teilweiser oder vollständiger neutralisation der freien Säuregruppen der Copolymerisate durch Zusatz von Basen, dadurch gekennzeichnet, dass man als Monomere

a) 1-45 Gew.-% ethylenisch ungesättigte $(C_3-C_5)$-Monocarbonsäuren, ethylenisch ungesättigte $(C_4-C_6)$-Dicarbonsäuren oder deren Halbester mit aliphatischen $(C_1-C_8)$-Alkoholen oder Gemische dieser Monomeren, vorzugsweise Methacrylsäure, Acrylsäure, Crotonsäure, Maleinsäure, Maleinsäuremonoalkylester oder deren Gemische, und

b) 0,5-30 Gew.-% eines grenzflächenaktiven Crotonsäureesters der allgemeinen Formel I,

$$CH_3\text{-}CH=CH\text{-}\overset{\overset{\displaystyle O}{\|}}{C}\text{-}O\text{-}(CH_2\text{-}CH_2\text{-}O)_n\text{-}R \qquad (I)$$

worin n eine Zahl von 2 bis 100 und

R einen aliphatischen $(C_2-C_{30})$-Rest, der linear oder verzweigt sein kann, einen Mono-, Di- oder Trialkylphenylrest mit Alkylgruppen von jeweils 4 bis 12 C-Atomen, einen blockcopolymeren Rest der Formeln IIa oder IIb,

$$-(\underset{\displaystyle CH_3}{\underset{|}{CH}}=CH_2\text{-}O)_m\text{-}(CH_2\text{-}CH_2\text{-}O)_p\text{-}R^1 \qquad (IIa)$$

$$-(CH_2\text{-}\underset{\displaystyle CH_3}{\underset{|}{CH}}\text{-}O)_m\text{-}(CH_2\text{-}CH_2\text{-}O)_p\text{-}R^1 \qquad (IIb)$$

in denen m eine Zahl von 10 bis 100, p eine Zahl von 0 bis 100 und

$R^1$ = H, Crotyl, $(C_1-C_{20})$-Alkyl, Phenyl, Alkylphenyl mit $(C_1-C_{20})$-Alkylgruppen darstellen, oder

einen perfluorierten oder teilweise fluorierten $(C_1-C_{16})$-Alkylrest bedeutet, und

c) 30-85 Gew.-% Methacrylsäureester oder Acrylsäureester von aliphatischen $(C_1-C_{18})$-Alkoholen oder eine Mischung dieser Ester, und

d) 0-40 Gew.-% andere ethylenisch ungesättigte Comonomere, vorzugsweise Vinylester, Vinylaromaten, ethylenisch ungesättigte Nitrile, Ester von ethylenisch ungesättigten Mono- und Dicarbonsäuren, sofern sie nicht bereits oben unter c) aufgeführt sind, ethylenisch ungesättigte Sulfonsäre bzw. ethylenisch ungesättigte Sulfonsäurederivate, und

e) 0-3 Gew.-% mehrfach ethylenisch ungesättigte Verbindungen, vorzugsweise Divinylbenzol, Diallylphthalat, Butandioldiacrylat bzw. -dimethacrylat, und

f) 0-5 Gew.-% Molekulargewichtsregler, vorzugsweise Dodecylmercaptan, Tetrakismercaptoacetylpentaerythrit, Tetrachlorkohlenstoff oder Bromtrichlormethan,

copolymerisiert und das resultrierende Copolymerisat gegebenefalls durch Neutralisation mit Basen, vorzugsweise mit Alkali-, Ammonium- oder Amin-Basen, in ein wasserlösliches oder in Wasser kolloidal dispergierbares Copolymerisatsalz überführt.

10. Verfahren nach Anspruch 9, dadurch gekennzeichnet, dass man bei der Emulsionscopolymerisation das grenzflächenaktive Comonomere (b) in der Wasserphase vorlegt.

**Patentansprüche für den Vertragsstaat:** AT

1. Verfahren zur Hertstellung von Copolymerisaten durch radikalisch initiierte Emulsions- oder Lösungscopolymerisation ungesättigter, copolymerisationsfähiger Monomerer sowie gegebenenfalls nachfolgende teilweise oder vollständige Neutralisation der freien Säuregruppen der Copolymerisate durch Zusatz von Basen, dadurch gekennzeichnet, dass man als Monomere

a) 1-45 Gew.-% ethylenisch ungesättigte ($C_3$-$C_5$)-Monocarbonsäuren, ethylenisch ungesättigte ($C_4$-$C_6$)-Dicarbonsäuren oder deren Halbester mit aliphatischen ($C_1$-$C_8$)-Alkoholen oder Gemische dieser Monomeren, vorzugsweise Methacrylsäure, Acrylsäure, Crotonsäure, Maleinsäure, Maleinsäuremonoalkylester oder deren Gemische, und

b) 0,5-30 Gew.-% eines grenzflächenaktiven Crotonsäureesters der allgemeinen Formel I,

$$CH_3\text{-}CH=CH\text{-}\overset{\overset{\displaystyle O}{\|}}{C}\text{-}O\text{-}(CH_2\text{-}CH_2\text{-}O)_n\text{-}R \qquad (I)$$

worin n eine Zahl von 2 bis 100 und

R einen aliphatischen ($C_2$-$C_{30}$)-Rest, der linear oder verzweigt sein kann, einen Mono-, Di- oder Trialkylphenylrest mit Alkylgruppen von jeweils 4 bis 12 C-Atomen, einen blockcopolymeren Rest der Formeln IIa oder IIb,

$$\text{-}(\underset{\underset{\displaystyle CH_3}{|}}{CH}\text{-}CH_2\text{-}O)_m\text{-}(CH_2\text{-}CH_2\text{-}O)_p\text{-}R^1 \qquad (IIa)$$

$$\text{-}(CH_2\text{-}\underset{\underset{\displaystyle CH_3}{|}}{CH}\text{-}O)_m\text{-}(CH_2\text{-}CH_2\text{-}O)_p\text{-}R^1 \qquad (IIb)$$

in denen m eine Zahl von 10 bis 100, p eine Zahl von 0 bis 100 und

$R^1$ = H, Crotyl, ($C_1$ -$C_{20}$)-Alkyl, Phenyl, Alkylphenyl mit ($C_1$-$C_{20}$)-Alkylgruppen darstellen, oder einen perfluorierten oder teilweise fluorierten ($C_1$-$C_{16}$)-Alkylrest bedeutet, und

c) 30-85 Gew.-% Methacrylsäureester oder Acrylsäureester von aliphatischen ($C_1$-$C_{18}$)-Alkoholen oder eine Mischung dieser Ester, und

d) 0-40 Gew.-% andere ethylenisch ungesättigte Comonomere, vorzugsweise Vinylester, Vinylaromaten, ethylenisch ungesättigte Nitrile, Ester von ethylenisch ungesättigten Mono- und Dicarbonsäuren, sofern sie nicht bereits oben unter c) aufgeführt sind, ethylenisch ungesättigte Sulfonsäure bzw. ethylenisch ungesättigte Sulfonsäurederivate, und

e) 0-3 Gew.-% mehrfach ethylenisch ungesättigte Verbindungen, vorzugsweise Divinylbenzol, Diallylphthalat, Butandioldiacrylat bzw. -dimethacrylat, und

f) 0-5 Gew.-% Molekulargewichtsregler, vorzugsweise Dodecylmercaptan, Tetrakismercaptoacetylpentaerythrit, Tetrachlorkohlenstoff oder Bromtrichlormethan,

copolymerisiert und das resultierende Copolymerisat gegebenanfalls durch Neutralisation mit Basen, vorzugsweise mit Alkali-, Ammonium- oder Amin-Basen, in ein wasserlösliches oder in Wasser kolloidal dispergierbares Copolymerisatsalz überführt.

2. Verfahren nach Anspruch 1, dadurch gekennzeichnet, dass man bei der Emulsionscopolymerisation das grenzflächenaktive Comonomere (b) in der Wasserphase vorlegt.

3. Verfahren nach Anspruch 1 oder 2, dadurch gekennzeichnet, dass Copolymerisate in teilweise oder vollständig mit Basen neutralisierter wasserlöslicher oder in Wasser kolloidal dispergierbarer Form erhalten werden.

4. Verwendung der Copolymerisate, hergestellt nach Ansprüchen 1 bis 3, zum Verdicken von wässrigen Systemen, insbesondere wässrigen Dispersionen.

5. Verwendung der Copolymerisate, herstellt nach Ansprüchen 1 bis 3, in teilweise oder vollständig mit Basen neutralisierter, wasserlöslicher oder in Wasser kolloidal dispergierbarer Form zum Verdicken von wässrigen Systemen, insbesondere wässrigen Dispersionen.

6. Verwendung der Copolymerisate, hergestellt nach Ansprüchen 1 bis 3, zum Verdicken von Dispersionsfarben, Dispersionsglanzlacken, Textildruckpasten oder Papierdruckpasten.

7. Verwendung der Copolymerisate, hergestellt nach Ansprüchen 1 bis 3, in teilweise oder vollständig mit Basen neutralisierter, wasserlöslicher oder in Wasser kolloidal dispergierbarer Form zum Verdicken von Dispersionsfarben, Dispersionsglanzlacken, Textildruckpasten oder Papierdruckpasten.

8. Verwendung der Copolymerisate, hergestellt nach Ansprüchen 1 bis 3, zum Verdicken von wässrigen Systemen, insbesondere wässrigen Dispersionen, indem man die Copolymerisate in ihrer Säureform als Lösungen oder Dispersionen in der erforderlichen Menge mit dem zu verdickenden wässrigen System, insbesondere der zu verdickenden Dispersion, vermischt und das resultierende Gemisch anschliessend durch Zusatz von Basen teilweise oder vollständig neutralisiert oder schwach alkalisch einstellt, so dass die Copolymerisate als in Wasser lösliche oder kolloidal dispergierbare Copolymerisatsalze vorliegen.

9. Verwendung der Copolymerisate, hergestellt nach Ansprüchen 1 bis 3, als Schlichtmittel in der Textilindustrie.

**Claims for the Contracting states:**
BE, CH, DE, FR,GB,IT, Li, LU, NL, SE

1. Copolymers prepared by emulsion or solution cpolymerization, initiated by free radicals, of unsaturated, copolymerizable monomers and, where relevant, subsequent partial or complete neutralization of the free acid groups of the copolymers by addition of bases, characterized in that the copolymers are built up from

a) 1-45% by weight of ethylenically unsaturated ($C_3$-$C_5$)-monocarboxylic acids, ethylenically unsaturated ($C_4$-$C_6$)-dicarboxylic acids or monoesters thereof with aliphatic ($C_1$-$C_8$)-alcohols, or mixtures of these monomers, preferably methacrylic acid, acrylic acid, crotonic acid, maleic acid, monoalkyl maleates or mixtures thereof,

b) 0.5 to 30% by weight of a surface-active crotonic acid ester of the general formula I

$$CH_3\text{-}CH=CH\text{-}\overset{\overset{\displaystyle O}{\|}}{C}\text{-}O\text{-}(CH_2\text{-}CH_2\text{-}O)_n\text{-}R \quad (I)$$

in which n denotes a number from 2 to 100 and

R denotes an aliphatic ($C_2$-$C_{30}$)-radical, which can be linear or branched, a mono-, di- or tri-alkylphenyl radical with alkyl groups of in each case 4 to 12 carbon atoms or a block-copolymeric radical of the formula IIa or IIb

$$\text{-}(\underset{\displaystyle CH_3}{\underset{|}{CH}}\text{-}CH_2\text{-}O)_m\text{-}(CH_2\text{-}CH_2\text{-}O)_p\text{-}R^1 \quad (IIa)$$

$$\text{-}(CH_2\text{-}\underset{\displaystyle CH_3}{\underset{|}{CH}}\text{-}O)_m\text{-}(CH_2\text{-}CH_2\text{-}O)_p\text{-}R^1 \quad (IIb)$$

in which m represents a number from 10 to 100, p represents a number from 0 to 100 and

$R^1$ represents H, crotyl, ($C_1$-$C_{20}$)-alkyl, phenyl or alkylphenyl with ($C_1$-$C_{20}$)-alkyl groups, or

R denotes a perfluorinated or partially fluorinated ($C_1$-$C_{16}$)-alkyl radical,

c) 30-85% by weight of methacrylic acid esters or acrylic acid esters of aliphatic ($C_1$-$C_{18}$)-alcohols or a mixture of these esters,

d) 0-40% by weight of other ethylenically unsaturated comonomers, preferably vinyl esters, vinylaromatics, ethylenically unsaturated nitriles, esters of ethylenically unsaturated monocarboxylic and dicarboxylic acids, where these have not already been listed above under c), ethylenically unsaturated sulfonic acids or ethylenically unsaturated sulfonic acid derivatives,

e) 0-3% by weight of polyethylenically unsaturated compounds, preferably divinylbenzene, diallyl phthalate and butanediol diacrylate or dimethacrylate and

f) 0-5% by weight of molecular weight regulators, preferably dodecylmercaptan, tetrakis-mercaptoacetyl-pentaerythritol, carbon tetrachloride or bromotrichlormethane.

2. Copolymers as claimed in claim 1, characterized in that they are in partly or completely base-neutralized water-soluble or colloidally water-dispersible form.

3. Use of the copolymers as claimed in either of claims 1 and 2, for thickening aqueous systems, in particular aqueous dispersion.

4. Use of the copolymers in partly or completely base-neutralized, water-soluble or colloidally water-dispersible form as claimed in either of claims 1 and 2, for thickening aqueous systems, in particular aqueous dispersions.

5. Use of the copolymers as claimed in either of claims 1 and 2, for thickening emulsion paints, emulsion gloss lacquers, textile printing pastes or paper printing pastes.

6. Use of the copolymers in partly or completely base-neutralized, water-soluble or colloidally water-dispersible from as claimed in either of claims 1 and 2, for thickening emulsion paints, emulsion gloss lacquers, textile printing pastes or paper printing pastes.

7. Use of the copolymers as claimed in either of claims 1 and 2, for thickening aqueous systems, in particular aqueous dispersions, by mixing the copolymers in their acid form as a solution dispersion in the required amount with the aqueous system to be thickened, in particular the dispersion to be thickened, and then partly or completely neutralizing the resulting mixture or rendering it weakly alkaline by addition of bases, so that the copolymers are present as water-soluble or colloidally water-dispersible copolymers salts.

8. Use of copolymers as claimed in either of claims 1 and 2, as sizing agents in the textile industry.

9. Process for the preparation of copolymers by emulsion or solution copolymerization, initiated by free radicals, of unsaturated, copolymerizable monomers and, where relevant, subsequent partial or complete neutralization of the free acid groups of the copolymers by addition of bases, characterized in that as monomers, are copolymerized

a) 1-45% by weight of ethylenically unsaturated ($C_3$-$C_5$)-monocarboxylic acids, ethylenically unsaturated ($C_4$-$C_6$)-dicarboxylic acids or monoesters thereof with aliphatic ($C_1$-$C_8$)-alcohols, or mixtures of these monomers, preferably methacrylic acid, acrylic acid, crotonic acid, maleic acid, monoalkyl maleates or mixtures thereof,

b) 0.5 to 30% by weight of a surface-active crotonic acid ester of the general formula I

$$CH_3\text{-}CH=CH\text{-}\overset{\overset{\displaystyle O}{\|}}{C}\text{-}O\text{-}(CH_2\text{-}CH_2\text{-}O)_n\text{-}R \quad (I)$$

in which n denotes a number from 2 to 100 and

R denotes an aliphatic ($C_2$-$C_{30}$)-radical, which can be linear or branched, a mono-, di- or tri-alkylphenyl radical with alkyl groups oí in each case 4 to 12 carbon atoms or a block-copolymeric radical of the formula IIa or IIb

$$\text{-}(\underset{\displaystyle CH_3}{\underset{|}{CH}}\text{-}CH_2\text{-}O)_m\text{-}(CH_2\text{-}CH_2\text{-}O)_p\text{-}R^1 \quad (IIa)$$

$$\text{-}(CH_2\text{-}\underset{\displaystyle CH_3}{\underset{|}{CH}}\text{-}O)_m\text{-}(CH_2\text{-}CH_2\text{-}O)_p\text{-}R^1 \quad (IIb)$$

in which m represents a number from 10 to 100, p represents a number from 0 to 100 and

$R^1$ represents H, crotyl, ($C_1$-$C_{20}$)-alkyl, phenyl or alkylphenyl with ($C_1$-$C_{20}$)-alkyl groups, or

R denotes a perfluorinated or partially fluorinated ($C_1$-$C_{16}$)-alkyl radical,

c) 30-85% by weight of methacrylic acid esters or acrylic acid esters of aliphatic ($C_1$-$C_{18}$)-alcohols or a mixture of these esters,

d) 0-40% by weight of other ethylenically unsaturated comonomers, preferably vinyl esters, vinylaromatics, ethylenically unsaturated nitriles, esters

of ethylenically unsaturated monocarboxylic and dicarboxylic acids, where these have not already been listed above under c), ethylenically unsaturated sulfonic acids or ethylenically unsaturated sulfonic acid derivatives,

e) 0-3% by weight of polyethylenically unsaturated compounds, preferably divinylbenzene, diallyl phthalate and butanediol diacrylate or dimethacrylate and

f) 0-5% by weight of molecular weight regulators, preferably dodecylmercaptan, tetrakis-mercaptoacetyl-pentaerythritol, carbon tetrachloride or bromotrichloromethane, and, if appropriate, converting the resulting copolymer into a water-soluble or colloidally water-dispersible copolymer salt by neutralization with bases, preferably with alkali metal, ammonium or amine bases.

10. Process as claimed in claim 9, characterized in that the surface-active comonomer (b) is in the aqueous phase in the emulsion copolymerization.

Claims for the Contracting state: AT

1. Process for the preparation of copolymers by emulsion or solution copolymerization, initiated by free radicals, of unsatureted, copolymerizable monomers and, where relevant, subesequent partial or complete neutralization of the free acid groups of the copolymers by addition of bases, characterized in that, as monomers, are copolymerized

a) 1-45% by weight of ethylenically unsaturated $(C_3\text{-}C_5)$-monocarboxylic acids, ethylenically unsaturated $(C_4\text{-}C_6)$-dicarboxylic acids or monoesters thereof with aliphatic $(C_1\text{-}C_8)$-alcohols, or mixtures of these monomers, preferably methacrylic acid, acrylic acid, crotonic acid, maleic acid, monoalkyl maleates or mixtures thereof,

b) 0.5 to 30% by weight of a surface-active crotonic acid ester of the general formula I

$$CH_3\text{-}CH=CH\text{-}\overset{\overset{\displaystyle O}{\|}}{C}\text{-}O\text{-}(CH_2\text{-}CH_2\text{-}O)_n\text{-}R \qquad (I)$$

in which n denotes a number from 2 to 100 and

R denotes an aliphatic $(C_2\text{-}C_{30})$-radical, which can be linear or branched, a mono-, di- or tri-alkylphenyl radical with alkyl groups of in each case 4 to 12 carbon atoms or a block-copolymeric radical of the formula IIa or IIb

$$\text{-}(\underset{\underset{\displaystyle CH_3}{|}}{CH}\text{-}CH_2\text{-}O)_m\text{-}(CH_2\text{-}CH_2\text{-}O)_p\text{-}R^1 \qquad (IIa)$$

$$\text{-}(CH_2\text{-}\underset{\underset{\displaystyle CH_3}{|}}{CH}\text{-}O)_m\text{-}(CH_2\text{-}CH_2\text{-}O)_p\text{-}R^1 \qquad (IIb)$$

in which m represents a number from 10 to 100, p represents a number from 0 to 100 and

$R^1$ represents H, crotyl, $(C_1\text{-}C_{20})$-alkyl, phenyl or alkylphenyl with $(C_1\text{-}C_{20})$-alkyl groups, or

R denotes a perfluorinated or partially fluorinated $(C_1\text{-}C_{16})$-alkyl radical,

c) 30-85% by weight of methacrylic acid esters or arcylic acid esters of aliphatic $(C_1\text{-}C_{18})$-alcohols or a mixture of these esters,

d) 0-40% by weight of other ethylenically unsaturated comonomers, preferably vinyl esters, vinylaromatics, ethylenically unsaturated nitriles, esters of ethylenically unsaturated monocarboxylic and dicarboxylic acids, where these have not already been listed above under c), ethylenically unsaturated sulfonic acids or ethylenically unsaturated sulfonic acid derivatives,

e) 0-3% by weight of polyethylenically unsaturated compounds, preferably divinylbenzene, diallyl phthalate and butanediol diacrylate or dimethacrylate and

f) 0-5 by weight of molecular weight regulators, preferably dodecylmercaptan, tetrakis-mercaptoacetyl-pentaerythritol, carbon tetrachloride or bromotrichloromethane, and, if appropriate, converting the resulting copolymer into a water-soluble or colloidally water-dispersible copolymer salt by neutralization with bases, preferably with alkali metal, ammonium or amine bases.

2. Process as claimed in claim 1, characterized in that the surface-active comonomer (b) is in the aqueous phase in the emulsion copolymerization.

3. Process as claimed in either of claims 1 and 2, characterized in that the copolymers are obtained in partly or completely base-neutralized water-soluble or colloidally water-dispersible form.

4. Use of the copolymers, prepared as claimed in claims 1 to 3, for thickening aqueous systems, in particular aqueous dispersions.

5. Use of the copolymers, prepared as claimed in claims 1 to 3, in partly or completely base-neutralized, water-soluble or colloidally water-dispersible form for thickening aqueous systems, in particular aqueous dispersions.

6. Use of the copolymers, prepared as claimed in claims 1 to 3, for thickening emulsion paints, emulsion gloss lacquers, textile printing pastes or paper printing pastes.

7. Use of the copolymers, prepared as claimed in claims 1 to 3, in partly or completely base-neutralized, water-soluble or colloidally water-dispersible form for thickening emulsion paints, emulsion gloss lacquers, textile printing pastes or paper printing pastes.

8. Use of the copolymers, prepared as claimed in claims 1 to 3, for thickening aqueous systems, in particular aqueous dispersions, by mixing the copolymers in their acid form as solutions or dispersions in the required amount with the aqueous system to be thickened, in particular the dispersion to be thickened, and then partly or completely neutralizing the resulting mixture or rendering it weakly alkaline by addition of bases, so that the copolymers are present as water-soluble or colloidally water-dispersible copolymer salts.

9. Use of the copolymers, prepared as claimed in claims 1 to 3, as sizing agents in the textile industry.

**Revendications pour les Etats contractants:**
BE, CH, DE, FR, GB, IT, Li, LU, NL, SE

1. Copolymères préparés par copolymerisation à initiation radicalaire en émulsion ou en solution de monomères insaturés aptes à la copolymérisation, ainsi qu'éventuellement neutralisation subséquente, partielle ou totale, des groupes d'acide libre du copolymère par addition de bases, copolymères caractérisés en ce qu'ils sont constitués par:

a) 1 à 45% en poids d'acides monocarboxyliques insaturés éthyléniques en ($C_3$-$C_5$), d'acides dicarboxyliques insaturés éthyléniques en ($C_4$-$C_6$) ou de leurs semi-esters avec des alcools aliphatiques en ($C_1$-$C_8$), ou de mélanges de ces monomères, de préférence l'acide méthacrylique, l'acide acrylique, l'acide crotonique, l'acide maléique, un monoesteralkylique de l'acide maléique ou leurs mélanges,

b) 0,5 à 30% en poids d'un ester crotonique tensio-actif répondant à la formule générale I:

$$CH_3-CH=CH-\overset{\overset{O}{\|}}{C}-O-(CH_2-CH_2-O)_n-R \qquad (I)$$

dans laquelle n représente un nombre de 2 à 100, et
R représente un reste aliphatique en ($C_2$-$C_{30}$), qui peut être linéaire ou ramifié, un reste mono-, di- ou trialkylphényle avec des groupes alkyles ayant chacun 4 à 12 atomes de carbone, un reste de copolymère séquencé de formule IIa ou IIb:

$$-(\underset{\underset{CH_3}{|}}{CH}-CH_2-O)_m-(CH_2-CH_2-O)_p-R^1 \qquad (IIa)$$

$$-(CH_2-\underset{\underset{CH_3}{|}}{CH}-O)_m-(CH_2-CH_2-O)_p-R^1 \qquad (IIb)$$

dans lesquelles m représente un nombre de 10 à 100, p un nombre de 0 à 100 et
$R^1$ = H, ou un groupe crotyle, alkyle en ($C_1$-$C_{20}$), phényle, alkylphényle avec des groupes alkyles en ($C_1$-$C_{20}$),
ou un reste alkyle en ($C_1$-$C_{16}$) perfluoré ou partiellement fluoré,

c) 30 à 85% en poids d'un ester méthacrylique ou acrylique d'alcool aliphatique en ($C_1$-$C_{18}$) ou d'un mélange de ces esters,

d) 0 à 40% en poids d'autres comonomères insaturés éthyléniques, de préférence des esters vinyliques, des composés aromatiques vinyliques, des nitriles insaturés éthyléniques, des esters d'acides mono- et dicarboxyliques insaturés éthyléniques, dans la mesure où ils ne sont pas déjà mentionnés plus haut dans la rubrique c), des acides sulfoniques insaturés éthyléniques et des dérivés d'acides sulfoniques insaturés éthyléniques,

e) 0 à 3% en poids de composés insaturés comprenant plusieurs liaisons éthyléniques, de préférence le divinilbenzène, le phthalate de diallyle, le diacrylate de butanediol ou le diméthacrylate de butanediol, et

f) 0 à 5% en poids d'un régulateur de poids moléculaire, de préference les dodécylmercaptan, tétrakismercaptoacétylpentaérythritol tétrachlorure de carbone ou bromotrichlorométhane.

2. Copolymères selon la revendication 1, caractérisés en ce qu'ils sont sous une forme soluble dans l'eau ou pouvant former une dispersion colloïdale aqueuse, partiellement ou complètement neutralisée à l'aide d'une base.

3. Utilisation des copolymères selon les revendications 1 ou 2 pour l'épaississement de systèmes aqueux, en particulier de dispersions aqueuses.

4. Utilisation des copolymères sous forme partiellement ou complètement neutralisée avec une base, solubles dans l'eau ou pouvant former une dispersion colloïdale aqueuse, selon les revendications 1 ou 2, pour l'épaissement de systèmes aqueux, en particulier de dispersions aqueuses.

5. Utilisation des copolymères selon les revendications 1 ou 2 pour l'épaississement de peintures-dispersions, de vernis-dispersions brillants, de pâtes pour l'impression de textiles ou de pâtes pour l'impression du papier.

6. Utilisation des copolymères sous forme partiellement ou totalement neutralisée avec une base, solubles dans l'eau ou capables de former une dispersion colloïdale aqueuse, selon les revendications 1 ou 2, pour l'épaississement de peintures-dispersions, de vernis-dispersions brillants, de pâtes pour l'impression de textiles ou de pâtes pour l'impression de papier.

7. Utilisation des copolymères selon les revendications 1 ou 2 pour l'épaississement de systèmes aqueux, en particulier de dispersions aqueuses, selon laquelle on mélange les copolymères, sous leur forme acide comme solution ou comme dispersion, dans les proportions nécessaires, au système aqueux à épaissir, en particulier à la dispersion à épaissir, et ensuite on neutralise partiellement ou totalement le mélange résultant par addition de bases ou on l'ajuste à un pH faiblement alcalin, de façon que le copolymère se trouve sous une forme de sel de copolymère soluble dans l'eau ou pouvant former une dispersion colloïdale.

8. Utilisation des copolymères selon les revendications 1 ou 2 comme apprêts dans l'industrie du textile.

9. Procédé de préparation de copolymères par copolymérisation à initiation radicalaire en émulsion ou en solution de monomères insaturés aptes à la copolymérisation ainsi qu'éventuellement neutralisation partielle ou totale subséquente des groupes d'acide libre du copolymère par addition de bases, caractérisé en ce que, comme monomères on copolymérise:

a) 1 à 45% en poids d'acides monocarboxyliques insaturés éthyléniques en ($C_3$-$C_5$), d'acides dicarboxyliques insaturés éthyléniques en ($C_4$-$C_6$) ou de leurs semi-esters avec des alcools aliphatiques en ($C_1$-$C_8$) ou de mélanges de ces monomères, de préférence l'acide méthacrylique, l'acide acrylique, l'acide crotonique, l'acide maléique, un monoalkylique ester de l'acide maléique ou leurs mélanges,

b) 0,5 à 30% en poids d'un ester crotonique tensio-actif répondant à la formule générale I:

$$CH_3\text{-}CH=CH\text{-}\overset{\overset{\displaystyle O}{\|}}{C}\text{-}O\text{-}(CH_2\text{-}CH_2\text{-}O)_n\text{-}R \qquad (I)$$

dans laquelle n représente un nombre de 2 à 100, et R représente un reste aliphatique en ($C_2$-$C_{30}$), qui peut être linéaire ou ramifié, un reste mono-, di- ou trialkylphényle avec des groupes alkyles ayant chacun 4 à 12 atomes de carbone, un reste de copolymère séquencé de formule IIa ou IIb:

$$\text{-}(\underset{\underset{\displaystyle CH_3}{|}}{CH}\text{-}CH_2\text{-}O)_m\text{-}(CH_2\text{-}CH_2\text{-}O)_p\text{-}R^1 \qquad (IIa)$$

$$\text{-}(CH_2\text{-}\underset{\underset{\displaystyle CH_3}{|}}{CH}\text{-}O)_m\text{-}(CH_2\text{-}CH_2\text{-}O)_p\text{-}R^1 \qquad (IIb)$$

dans lesquelles m représente un nombre de 10 à 100, p un nombre de 0 à 100 et

$R^1$ = H, ou un groupe crotyle, alkyle en ($C_1$-$C_{20}$), phényle, alkylphényle avec des groupes alkyles en ($C_1$-$C_{20}$),

ou un reste alkyle en ($C_1$-$C_{16}$) perfluoré ou partiellement fluoré,

c) 30 à 85% en poids d'un ester méthacrylique ou acrylique d'alcool aliphatique en ($C_1$-$C_{18}$) ou d'un mélange de ces esters,

d) 0 à 40% en poids d'autres comonomères insaturés éthyléniques, de préférence des esters vinyliques, des composés aromatiques vinyliques, des nitriles insaturés éthyléniques, des esters d'acides mono- et dicarboxyliques insaturés éthyléniques, dans la mesure où ils ne sont pas déjà mentionnés plus haut dans la rubrique c), des acides sulfoniques insaturés éthyléniques et des dérivés d'acides sulfoniques insaturés éthyléniques, et

e) 0 à 3% en poids de composés insaturés comprenant plusieurs liaisons éthyléniques, de préférence le divinylbenzène, le phtalate de diallyle, le diacrylate du butanediol, ou le diméthacrylate du butanediol, et

f) 0 à 5% en poids d'un régulateur de poids moléculaire, de préférence les dodécylmercaptan, tétrakis-(mercaptoacétyl)-pentaérythritol, tétrachlorure de carbone ou bromotrichlorométhane, et on transforme le copolymère résultant éventuellement par neutralisation avec des bases, de préférence des bases alcalines, d'ammonium ou d'amines, en sel de copolymère soluble dans l'eau ou capable de former une dispersion colloïdale aqueuse.

10. Procédé selon la revendication 9 caractérisé en ce que, dans la copolymérisation en émulsion, on dispose le comonomère (b) tensioactif dans la phase aqueuse.

**Revendications pour l'Etat contractant:** AT

1. Procédé de préparation de copolymères par copolymérisation à initiation radicalaire en émulsion ou en solution de monomères insaturés aptes à la copolymérisation ainsi qu'éventuellement neutralisation partielle ou totale subséquente des groupes d'acide libre du copolymère par addition de bases, caractérisé en ce que, comme monomères on copolymérise:

a) 1 à 45% en poids d'acides monocarboxyliques insaturés éthyléniques en ($C_3$-$C_5$), d'acides dicarboxyliques insaturés éthyléniques en ($C_4$-$C_6$) ou de leurs semi-esters avec des alcools aliphatiques en ($C_1$-$C_8$) ou de mélanges de ces monomères, de préférence l'acide méthacrylique, l'acide acrylique, l'acide crotonique, l'acide maléique, un monoalkylique ester de l'acide maléique ou leurs mélanges,

b) 0,5 à 30% en poids d'un ester crotonique tensio-actif répondant à la formule générale I

$$CH_3\text{-}CH=CH\text{-}\overset{\overset{\displaystyle O}{\|}}{C}\text{-}O\text{-}(CH_2\text{-}CH_2\text{-}O)_n\text{-}R \qquad (I)$$

dans laquelle n représente un nombre de 2 à 100, et R représente un reste aliphatique en ($C_2$-$C_{30}$), qui peut être linéaire ou ramifié, un reste mono-, di- ou trialkylphényle avec des groupes alkyles ayant chacun 4 à 12 atomes de carbone, un reste de copolymère séquencé de formule IIa ou IIb:

$$\text{-}(\underset{\underset{\displaystyle CH_3}{|}}{CH}\text{-}CH_2\text{-}O)_m\text{-}(CH_2\text{-}CH_2\text{-}O)_p\text{-}R^1 \qquad (IIa)$$

$$\text{-}(CH_2\text{-}\underset{\underset{\displaystyle CH_3}{|}}{CH}\text{-}O)_m\text{-}(CH_2\text{-}CH_2\text{-}O)_p\text{-}R^1 \qquad (IIb)$$

dans lesquelles m représente un nombre de 10 à 100, p un nombre de 0 à 100 et

$R^1$ = H, ou un groupe crotyle, alkyle en ($C_1$-$C_{20}$), phényle, alkylphényle avec des groupes alkyles en ($C_1$-$C_{20}$), ou un reste alkyle en ($C_1$-$C_{16}$) perfluoré ou partiellement fluoré,

c) 30 à 85% en poids d'un ester méthacrylique ou acrylique d'alcool aliphatique en ($C_1$-$C_{18}$) ou d'un mélange de ces esters,

d) 0 à 40% en poids d'autres comonomères insaturés éthyléniques, de préférence des esters vinyliques, des composés aromatiques vinyliques, des nitriles insaturés éthyléniques, des esters d'acides mono- et dicarboxyliques insaturés éthyléniques, dans la mésure où ils ne sont pas déjà mentionnés plus haut dans la rubrique c), des acides sulfoniques insaturés éthyléniques et les dérivés d'acides sulfoniques insaturés éthyléniques, et

e) 0 à 3% en poids de composés insaturés comprenant plusieurs liaisons éthyléniques, de préférence le divinylbenzène, le phtalate de diallyle, le diacrylate du butanediol ou le diméthacrylate du butanediol, et

f) 0 à 5% en poids d'un régulateur de poids moléculaire, de préférence les dodécylmercaptan, tétrakis-(mercaptoacétyl)-pentaérythritol le tétrachlorure de carbone ou bromotrichlorométhane,

et on transforme le copolymère résultant éventuellement par neutralisation avec des bases, de préférence des bases alcalines, d'ammonium ou d'amines, en sel de copolymère soluble dans l'eau ou capable de former une dispersion colloïdale aqueuse.

2. Procédé selon la revendication 1 caractérisé en

ce que, dans la copolymérisation en émulsion, on dispose le comonomère (b) tensioactif dans la phase aqueuse.

3. Procédé selon les revendications 1 ou 2 caractérisé en ce que les copolymères sont obtenus sous une forme partiellement ou totalement neutralisée avec des bases, soluble dans l'eau ou capable de former une dispersion aqueuse colloïdale.

4. Utilisation des copolymères préparés selon les revendications 1 à 3 pour l'épaississement de systèmes aqueux, en particulier de dispersions aqueuses.

5. Utilisation des copolymères préparés selon les revendications 1 à 3 sous forme partiellement ou totalement neutralisée avec des bases, solubles dans l'eau ou capables de former une dispersion aqueuse colloïdale, pour l'épaississement de systèmes aqueux, en particulier de dispersions aqueuses.

6. Utilisation des copolymères préparés selon les revendications 1 à 3 pour l'épaississement de peintures-dispersions, de vernis-dispersions brillants, de pâtes pour l'impression de textiles ou de pâtes pour l'impression de papier.

7. Utilisation des copolymères préparés selon les revendications 1 à 3, sous forme partiellement ou totalement neutralisée avec des bases, solubles dans l'eau ou capable de former une dispersion aqueuse colloïdale, pour l'épaississement de peintures-dispersions, de vernis-dispersions brillants, de pâtes pour l'impression de textiles ou de pâtes pour l'impression de papier.

8. Utilisation de copolymère préparés selon les revendications 1 à 3 pour l'épaississement de systèmes aqueux, en particulier de dispersions aqueuses, selon laquelle on mélange les copolymères, sous leur forme acide, comme solution ou comme dispersion, dans les proportions nécessaires, au système aqueux à épaissir, en particulier à la dispersion à épaissir, et ensuite on neutralise partiellement ou totalement le mélange résultant par addition de bases ou on l'ajuste à un pH faiblement alcalin, de façon que les copolymères se trouvent sous la forme de sels de copolymères solubles dans l'eau ou pouvant former une dispersion colloïdale.

9. Utilisation des copolymères préparés selon les revendications 1 à 3 comme apprêts dans l'industrie du textile.